# EUROPÄISCHE PATENTANMELDUNG

(11) **EP 1 569 117 A1**
(43) Veröffentlichungstag der Anmeldung: **31.08.2005**
(21) Anmeldenummer: 05001724.3
(22) Anmeldetag: 27.01.2005
(51) Int. Cl.: G06F 11/10

(54) **Verfahren zum sicheren Berechnen einer Prüfsumme**

(30) Priorität: 11.02.2004 DE 102004006645
(71) Anmelder: Giesecke & Devrient GmbH, 81677 München (DE)
(72) Erfinder: Baldischweiler, Michael, 81825 München (DE); Wirén, Arvid, 81927 München (DE); Weiss, Dieter, 81677 München (DE)

(57) **Zusammenfassung**

Die Erfindung schafft ein Verfahren zum sicheren Berechnen einer Prüfsumme, die zum Absichern eines Speicherinhalts vorgesehen ist, der in einen nichtflüchtigen Speicher (NVM) geschrieben werden soll. Bei dem Verfahren wird ein Speicherinhalt außerhalb des nichtflüchtigen Speichers (NVM) bereitgestellt und eine Prüfsumme über zumindest einen Teil des außerhalb des Speichers (NVM) bereitstehenden Speicherinhalts berechnet. Auf diese Weise können an Hand der Prüfsumme auch solche Manipulationen an dem Speicherinhalt detektiert werden, die während des Schreibens des Speicherinhalts in den nichtflüchtigen Speichers erfolgen.

## Beschreibung

Die Erfindung betrifft ein Verfahren zum sicheren Berechnen einer Prüfsumme, die zum Absichern eines Speicherinhalts vorgesehen ist, der in einen nichtflüchtigen Speicher (NVM) geschrieben werden soll, insbesondere bei einem tragbaren Datenträger wie z.B. einer Chipkarte.

Äußere Einflüsse wie z.B. Temperaturschwankungen, Hitze, Spannungsschwankungen und dergleichen können die Eigenschaften eines nichtflüchtigen Speichers und damit seinen Speicherinhalt beeinflussen. Die äußeren Einflüsse können in natürlichen Schwankungen der Umgebungsbedingungen bestehen, können aber auch auf Fehlbedienung zurückgehen oder auf Angriffe, mit denen der Speicherinhalt gezielt verändert (manipuliert) oder ausgelesen werden soll.

Bei tragbaren Datenträgern (Tokens, Sicherheitsmodulen, Chipmodulen) wie z.B. Chipkarten (Mikroprozessor- oder Speicher-Chipkarten), die typischerweise als nichtflüchtigen Speicher ein EEPROM (electrically erasable random access memory) und als flüchtigen Speicher ein RAM (random access memory) haben, ist besonders das EEPROM anfällig für solche äußere Einflüsse.

Zum Absichern des Speicherinhalts des nichtflüchtigen Speichers (NVM), z.B. des EEPROM in einer Chipkarte, werden häufig Fehlererkennungscodes (EDC error detection codes) verwendet, mit denen Veränderungen von Speicherinhalten detektiert werden sollen. Bei einem solchen EDC wird, nachdem der Speicherinhalt in dem nichtflüchtigen Speicher (NVM) abgespeichert ist, eine Prüfsumme oder gleichbedeutend Checksumme über den Speicherinhalt berechnet und im Anschluss an den Speicherinhalt in dem nichtflüchtigen Speicher (NVM) abgespeichert.

Wird der Speicherinhalt des NVM verändert, ergibt eine erneute Prüfsummenbildung eine Prüfsumme, die sich von der im NVM abgespeicherten Prüfsumme unterscheidet. Durch einen Vergleich der erneut berechneten Prüfsumme mit der abgespeicherten Prüfsumme lassen sich somit Veränderungen des Speicherinhalts detektieren.

Die Prüfsumme kann nach unterschiedlichen Verfahren berechnet werden. Bei der Längssummenprüfung (LRC, longitudinal redundancy check) wird die Prüfsumme (XOR-Prüfsumme) durch eine sukzessive XOR-Verknüpfung der einzelnen Bytes des Speicherinhalts berechnet. Bei der aufwändigeren aber sichereren CRC-Prüfsummenbildung (CRC, cyclic redundancy check) wird die Prüfsumme (CRC-Prüfsumme) unter Verwendung von Schieberegistern und XOR-Verknüpfungen berechnet. CRC-Prüfsummen sind z.B. in ISO/IEC 13 239 genauer beschrieben.

Besonders wichtig ist eine gute Absicherung für empfindliche Speicherinhalte wie z.B. Programmcode für Anwendungen oder Betriebssysteme, Schlüssel, Zugriffsbedingungen, Zeigerstrukturen und Ähnliches.

Beim Übertragen oder Speichern von Speicherinhalten in den nichtflüchtigen Speicher (NVM) ist es wichtig, dass die Speicherinhalte unverändert übertragen bzw. abgespeichert werden.

Wird während des Übertragens oder Speicherns ein Angriff, z.B. ein Lichtangriff, auf den NVM durchgeführt, der den NVM beeinflusst, kann es vorkommen, dass der Speicherinhalt verändert wird, bevor er in den NVM geschrieben wird. Die Prüfsumme wird in diesem Fall über den veränderten Speicherinhalt berechnet und ist folglich mit dem veränderten Speicherinhalt konsistent, so dass an Hand der Prüfsumme die Veränderung des Speicherinhalts nicht erkannt werden kann.

Der Erfindung liegt die Aufgabe zu Grunde, ein Verfahren zum sicheren Berechnen einer Prüfsumme zu schaffen, mit dem sich auch Änderungen des Speicherinhalts, die während des Schreibens des Speicherinhalts in einen nichtflüchtigen Speicher (NVM) auftreten, detektieren lassen.

Die Aufgabe wird gelöst durch ein Verfahren nach dem unabhängigen Verfahrensanspruch. Vorteilhafte Ausgestaltungen der Erfindung sind in den abhängigen Ansprüchen angegeben.

Bei dem erfindungsgemäßen Verfahren gemäß dem unabhängigen Anspruch 1 wird ein Speicherinhalt, der in einen nichtflüchtigen Speicher (NVM) geschrieben werden soll und mit einer Prüfsumme abgesichert werden soll, zunächst außerhalb des nichtflüchtigen Speichers bereitgestellt. Unter Verwendung des außerhalb des nichtflüchtigen Speichers bereitstehenden Speicherinhalts wird die Prüfsumme über den Speicherinhalt oder zumindest über einen Teil des Speicherinhalts berechnet.

Falls während eines Schreibens des Speicherinhalts in den nichtflüchtigen Speicher der Speicherinhalt verändert wird, z.B. durch einen Angriff wie z.B. einen Lichtangriff, wird in den nichtflüchtigen Speicher der geänderte (manipulierte) Speicherinhalt geschrieben. Der nichtflüchtige Speicher erhält somit einen "falschen" Speicherinhalt. Die Prüfsumme wurde hingegen mit dem außerhalb des nichtflüchtigen Speichers bereitstehenden, unveränderten Speicherinhalt berechnet. Folglich sind die Prüfsumme und die geänderten Daten inkonsistent, so dass die gemäß der Erfindung berechnete Prüfsumme anzeigt, dass der Speicherinhalt verändert worden ist.

Daher ist gemäß Anspruch 1 ein besonders sicheres Verfahren zum Berechnen einer Prüfsumme zur Absicherung eines Speicherinhalts geschaffen, mit dem sich auch Änderungen des Speicherinhalts, die während des Schreibens des Speicherinhalts in einen nichtflüchtigen Speicher (NVM) auftreten, detektieren lassen.

Vorzugsweise werden der Speicherinhalt und die berechnete Prüfsumme in dem nichtflüchtigen Speicher (NVM) abgespeichert. Die Prüfsumme und der Speicherinhalt können insbesondere nach dem Berechnen der Prüfsumme abgespeichert werden. Alternativ kann mit dem Abspeichern des Speicherinhalts in den nichtflüchtigen Speicher schon begonnen werden, während zugleich aus der außerhalb des nichtflüchtigen Speichers bereitstehenden Kopie des Speicherinhalts die Prüfsumme berechnet wird. Der Speicherinhalt und die Prüfsumme können weiter in einem einzigen, gemeinsamen Schreibvorgang in den nichtflüchtigen Speicher geschrieben werden. Alternativ können der Speicherinhalt und die Prüfsumme in zwei gesonderten Schreibvorgängen in den nichtflüchtigen Speicher geschrieben werden. Beispielsweise kann erst, in einem ersten Schreibvorgang, der Speicherinhalt und anschließend, in einem zweiten Schreibvorgang, die Prüfsumme in den nichtflüchtigen Speicher geschrieben werden.

Der Speicherinhalt, aus dem die Prüfsumme berechnet wird, kann insbesondere in einem flüchtigen Speicher bereitgestellt werden, so dass die Prüfsumme aus einem im flüchtigen Speicher bereitstehenden Speicherinhalt berechnet wird, der i.d.R. weniger anfällig gegen äußere Einflüsse (z.B. Angriffe) ist als ein typischer nichtflüchtiger Speicher.

Der nichtflüchtige Speicher (NVM), und ggf. der flüchtige Speicher, ist vorzugsweise in einem tragbaren Datenträger, insbesondere einer Chipkarte, angeordnet. Der nichtflüchtige Speicher kann z.B. ein EEPROM sein. Der flüchtige Speicher kann z.B. ein RAM sein.

Gemäß einer Weiterbildung der Erfindung wird die Prüfsumme unter Verwendung mindestens zweier Teil-Prüfsummen berechnet, wobei weiter vorzugsweise die gesamte Prüfsumme schließlich aus den Teil-Prüfsummen berechnet wird. Vorzugsweise weist der Speicherinhalt mindestens zwei Teil-Speicherinhalte auf, wobei jede Teil-Prüfsumme aus einem anderen Teil-Speicherinhalt berechnet wird. Weiter bevorzugt wird mindestens eine der Teil-Prüfsummen unter Verwendung eines außerhalb des Speichers (NVM) bereitstehenden Teil-Speicherinhalts berechnet. Weiter bevorzugt wird mindestens eine der Teil-Prüfsummen unter Verwendung eines in dem Speicher (NVM) abgespeicherten Teil-Speicherinhalts berechnet.

Die Weiterbildung und ihre bevorzugten Ausführungsformen sind besonders bevorzugt für die Aktualisierung der Prüfsumme bei einer teilweisen Aktualisierung eines Speicherinhalts. Ausgegangen wird hierbei von dem Fall, dass von einem Speicherinhalt, der bereits in dem nichtflüchtigen Speicher abgespeichert ist, ein oder mehrere erste Teil-Speicherinhalte unverändert beibehalten werden sollen und ein oder mehrere zweite Teil-Speicherinhalte jeweils durch einen neuen zweiten Teil-Speicherinhalt überschrieben werden soll. Die Prüfsumme über den Speicherinhalt soll entsprechend aktualisiert werden. Der neue zweite Teil-Speicherinhalt wird zunächst in einem flüchtigen Speicher bereitgehalten, von dem aus er in den nichtflüchtigen Speicher übertragen werden soll. Gemäß der Erfindung wird die erste Teil-Prüfsumme über den (d.h. unter Verwendung des) im nichtflüchtigen Speicher abgespeicherten ersten Teil-Speicherinhalt berechnet; die zweite Teil-Prüfsumme wird über den (d.h. unter Verwendung des) außerhalb des nichtflüchtigen Speichers, z.B. im flüchtigen Speicher, bereitstehenden neuen zweiten Teil-Speicherinhalt berechnet. Da der erste Teil-Speicherinhalt nicht übertragen wird, besteht keine Gefahr, dass er während eines Übertragens verändert würde. Die erste Teil-Prüfsumme kann daher gefahrlos aus dem bereits im nichtflüchtigen Speicher abgespeicherten Teil-Speicherinhalt berechnet werden. Lediglich für den zweiten Teil-Speicherinhalt, der übertragen wird, besteht die Gefahr, dass er während eines Übertragens in den nichtflüchtigen Speicher verändert wird. Aus diesem Grund wird die zweite Teil-Prüfsumme aus dem außerhalb des nichtflüchtigen Speichers bereitstehenden Teil-Speicherinhalt berechnet. Aus der ersten und der zweiten Teil-Prüfsumme wird schließlich die gesamte Prüfsumme berechnet.

Wahlweise können nacheinander mehrere unterschiedliche Teil-Speicherinhalte des nichtflüchtigen Speichers aktualisiert werden. In diesem Fall werden mehrere Teil-Prüfsummen berechnet, wobei jede Prüfsumme, die über einen Teil-Speicherinhalt berechnet wird, der in den nichtflüchtigen Speicher übertragen werden soll, auf Grundlage eines Teil-Speicherinhalts außerhalb des nichtflüchtigen Speichers berechnet wird.

Im folgenden wird die Erfindung an Hand von Ausführungsbeispielen und unter Bezugnahme auf die Zeichnung näher erläutert, in der zeigen:
- Fig. 1: in schematischer Darstellung einen Speicherabschnitt eines nichtflüchtigen Speichers, in dem ein Speicherinhalt und als Prüfsumme über den Speicherinhalt eine CRC-Prüfsumme abgespeichert sind;
- Fig. 2: in schematischer Darstellung einen Speicherabschnitt eines nichtflüchtigen Speichers, dessen Speicherinhalt teilweise aktualisiert worden ist, und eine Veranschaulichung eines erfindungsgemäßen Verfahrens zum Aktualisieren der Prüfsumme über den Speicherinhalt.

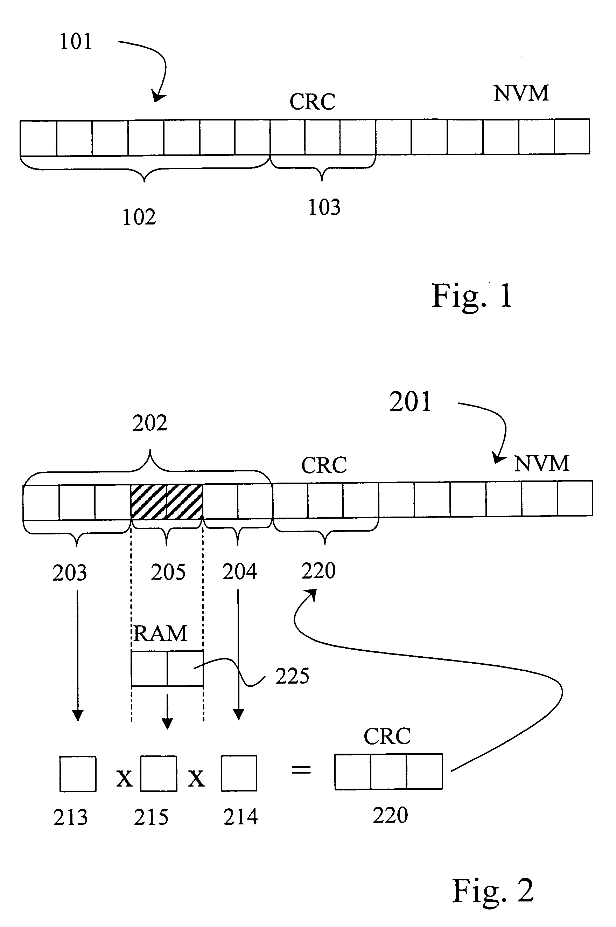

Fig. 1 zeigt schematisch einen Speicherabschnitt 101 eines nichtflüchtigen Speichers NVM, in dem ein Speicherinhalt (Datenteil) 102 und eine CRC-Prüfsumme 103 über den Speicherinhalt 102 abgespeichert sind. Der Speicherinhalt 102 ist im Beispiel aus Fig. 1 sieben Byte lang, die CRC-Prüfsumme 103 ist drei Byte lang. Die CRC-Prüfsumme 103 ist direkt nach dem Speicherinhalt 102 im NVM abgespeichert, was aber nicht zwingend ist.

Fig. 2 zeigt in schematischer Darstellung einen Speicherabschnitt 201 eines nichtflüchtigen Speichers NVM, dessen Speicherinhalt 202 teilweise und dessen Prüfsumme 220 ganz aktualisiert worden ist, und eine Veranschaulichung eines Verfahrens zum Aktualisieren der Prüfsumme 220 über den Speicherinhalt 202 bei einer teilweisen Aktualisierung des Speicherinhalts 202. Der Speicherinhalt 202 weist drei Teil-Speicherinhalte 203, 204, 205 auf. Ein erster Teil-Speicherinhalt 203 und ein zweiter Teil-Speicherinhalt 204 des Speicherinhalts 202 bleiben unverändert. Ein dritter Teil-Speicherinhalt 205 wird hingegen verändert, indem er durch einen neuen dritten Teil-Speicherinhalt 225 ersetzt wird, der in einem flüchtigen Speicher RAM bereitsteht. Zur Berechnung einer ersten Teil-Prüfsumme 213 über den ersten Teil-Speicherinhalt 203 wird der erste Teil-Speicherinhalt 203 aus dem nichtflüchtigen Speicher NVM verwendet. Ebenso wird zur Berechnung einer zweiten Teil-Prüfsumme 214 über den zweiten Teil-Speicherinhalt 204 der zweite Teil-Speicherinhalt 204 aus dem nichtflüchtigen Speicher NVM verwendet. Zur Berechnung einer dritten Teil-Prüfsumme 215 wird hingegen der im RAM bereitstehende neue dritte Teil-Speicherinhalt 225 verwendet. Schließlich wird durch eine beliebige geeignete Verknüpfung der drei Teil-Prüfsummen 213, 214, 215 die gesamte aktualisierte Prüfsumme 220 berechnet und in den nichtflüchtigen Speicher NVM übertragen. Die Berechnungen der Prüfsummen werden im flüchtigen Speicher RAM durchgeführt. Nur für den dritten Teil-Speicherinhalt 205 besteht die Gefahr, dass er bei einer Übertragung in den NVM manipuliert wird, da nur der dritte Teil-Speicherinhalt 205 in den NVM übertragen wird. Folglich wird nur für den dritten Teil-Speicherinhalt 205 zur Berechnung der Teil-Prüfsumme 215 der neue Teil-Speicherinhalt 225 verwendet, der vor dem Übertragen in den NVM im flüchtigen Speicher RAM bereitsteht.

## Patentansprüche

1. Verfahren zum sicheren Berechnen einer Prüfsumme (103; 220), die zum Absichern eines Speicherinhalts (102; 202) vorgesehen ist, der in einen nichtflüchtigen Speicher (NVM) geschrieben werden soll, wobei bei dem Verfahren
- ein Speicherinhalt (102; 225) außerhalb des nichtflüchtigen Speichers (NVM) bereitgestellt wird und
- eine Prüfsumme (103; 215, 220) über zumindest einen Teil des außerhalb des Speichers (NVM) bereitstehenden Speicherinhalts berechnet wird.

2. Verfahren nach Anspruch 1, wobei der Speicherinhalt (102; 225, 202) und die berechnete Prüfsumme (103; 215, 220) in den nichtflüchtigen Speicher (NVM) geschrieben werden.

3. Verfahren nach Anspruch 1 oder 2, wobei der Speicherinhalt (103; 225, 202) in einem flüchtigen Speicher (RAM) bereitgestellt wird.

4. Verfahren nach einem der Ansprüche 1 bis 3, wobei der nichtflüchtige Speicher (NVM) in einem tragbaren Datenträger, insbesondere einer Chipkarte, angeordnet ist.

5. Verfahren nach einem der Ansprüche 1 bis 4, wobei die Prüfsumme (220) unter Verwendung mindestens zweier Teil-Prüfsummen (213, 214; 215) berechnet wird.

6. Verfahren nach Anspruch 5, wobei mindestens eine (215) der Teil-Prüfsummen unter Verwendung eines außerhalb des Speichers (NVM) bereitstehenden Teil-Speicherinhalts (225) berechnet wird.

7. Verfahren nach Anspruch 6, wobei der außerhalb des Speichers (NVM) bereitstehende Teil-Speicherinhalt (225) zum Ersetzen eines in dem nichtflüchtigen Speicher (NVM) abgespeicherten Teil-Speicherinhalts (205) im RAM bereitgestellt ist.

8. Verfahren nach einem der Ansprüche 5 bis 7, wobei mindestens eine (213, 214) der Teil-Prüfsummen unter Verwendung eines in dem Speicher (NVM) abgespeicherten Teil-Speicherinhalts (203, 204) berechnet wird.

9. Datenträger, insbesondere Chipkarte, mit einem darin implementierten Verfahren nach einem der Ansprüche 1 bis 8.
